# EUROPEAN PATENT SPECIFICATION

(11) **EP 2 216 935 B1**
(45) Date of publication and mention of the grant of the patent: **19.12.2018**
(21) Application number: 08857848.9
(22) Date of filing: 12.09.2008
(51) Int. Cl.: H04L 29/06

(54) **METHOD AND DEVICE FOR ADJUSTING THE RELAYING STATE**
VERFAHREN UND VORRICHTUNG ZUR EINSTELLUNG EINER VERMITTLUNGSSTATION
PROCÉDÉ ET DISPOSITIF POUR AJUSTER L'ÉTAT DE RELAIS

(30) Priority: 30.11.2007 CN 200710195483
(43) Date of publication of application: 11.08.2010
(73) Proprietor: ZTE Corporation, Shenzhen, Guangdong 518057 (CN)
(72) Inventor: LI, Xiang, Guangdong 518057 (CN); ZHUO, Feng, Guangdong 518057 (CN); ZENG, Shenggen, Guangdong 518057 (CN)
(74) Representative: Novagraaf Technologies
(86) International application number: PCT/CN2008/072363
(87) International publication number: WO 2009/070999

(56) References cited:
- WO-A1-2006/119878
- CN-A- 1 770 759
- CN-A- 1 984 096
- CN-A- 101 170 747
- US-A1- 2006 045 102
- MADHUBABU BRAHMANAPALLY VERAZ NETWORKS PREREPA VISWANADHAM MARCONI KRISHNA GUNDAMARAJU ADC TELECOMMUNICATIONS: "Megaco/H.248 Call flow examples; draft-ietf-megaco-callflows-04 .txt", 20041112, vol. megaco, no. 4, 12 November 2004 (2004-11-12), XP015038600, ISSN: 0000-0004

## Description

### Field of the Invention

The present invention relates to communication field, in particular to a method and a device for adjusting a trunk state so as to solve the problem of inconsistency in the trunk circuit states between a media gateway controller and a media gateway.

### Background of the Invention

In the core network circuit domain of the 3rd generation wireless communication network (WCDMA, CDMA 2000, TD-SCDMA) and the next generation network (NGN), a technology and a networking mode which separate the bearer and the control are used. The main network elements of the above core network circuit domain are a media gateway (MGW) and a gateway controller (MGC), wherein the MGW provides the control functions of a media stream, mainly comprising the establishment and the maintenance of a bearer, connection control, voice coding processing and converting; the MGC provides the functions such as call control and mobility management, mainly comprising call control flow, user authentication, accounting, etc..

H.248/Megaco protocol describes a call by defining a termination and its attributes, a context and its attributes, and the topology relationship of the terminations in the context, associates the MGC with the MGW, which is the mainstream media gateway control protocol.

In the above bearer and control separation architecture, a trunk circuit is still an important media bearer medium. The state management and connection control function of the trunk circuit is completed on the MGW, while the MGC controls which trunk circuit should be used for a call. Therefore, both the MGW and the MGC have the state information of same trunk circuits. The MGW reports to the MGC the state of the trunk circuits managed by the MGW by sending the ServiceChange message in the H.248/Megaco protocol, or the MGC may actively send the AuditValue message in the H.248 protocol to the MGW to obtain a desired trunk circuit state. The MGC occupies a circuit, which is of a usable state on the corresponding MGW, according to the practical situation during the call processing procedure so as to complete the call establishment.

Since the above ServiceChange message and the AuditValue message need to be transmitted between the MGC and the MGW, they could be lost due to a signaling link congestion or other reasons. Once the messages are lost, it is possible that the MGC and the MGW have inconsistent knowledge on the trunk states. In addition, if the MGC or the MGW makes a mistake on software processing, it is also possible to result in a trunk circuit state inconsistency in the MGC and the
Case 1, the MGW considers one trunk circuit state as normal while the MGC considers this trunk circuit state as abnormal. Since the MGC considers the trunk circuit state as abnormal, it will not use this trunk circuit to establish a call, thus this trunk circuit will never be used, although this trunk circuit can be used on the MGW, which reduces the bearer capability of the trunk circuits of the entire MGW, and thus the call admission capability of the entire system will be less than the designed value.
Case 2, the MGC considers one trunk circuit state as normal, while the MGW considers this trunk circuit state as abnormal. The MGC will occupy this trunk circuit when establishing a call and dispatch a message to be processed to the MGW, while the MGW rejects to process the message because this trunk circuit state is abnormal, thus a call loss occurs.

At present, for the inconsistency of the trunk circuit states of the MGC and the MGW in case 1, the MGC restores the state of the trunk circuit state by regularly sending an Audit Value message to the MGW (i.e., the state is restored from unusable to usable.).

For case 2, it is not proper for the MGC to realize the trunk circuit state consistency between the MGC and the MGW by regularly sending the AuditValue message to the MGW through the trunk circuit. First, generally, the states of most trunk circuits are consistent, and most states on the MGC are usable, thus the number of the trunk circuits for which audit processing needs to be performed will be very large, and thus the audition for the trunk circuits can only be performed in batches. If there are excessive trunk circuits to be audited in each batch, it will result in a congestion at the interfaces of the MGC and the MGW or an excessive busyness in the processors of the MGC and the MGW in a short period, which affects the normal call service process. If the number of the trunk circuits to be audited in each batch is small, it will result in that the restoration time of the state inconsistency of the trunk circuits in the MGC and the MGW is too long. During the restoration time, the call control on the MGC may select the trunk circuit of inconsistent state for a plurality of times, which results in a plurality of times of the call loss. In conclusion, as to the above case 2, it is necessary to provide a faster and simpler restoration method which leads to less call loss.

US 2006/045102 provides a method for recovering a mismatch between a media gateway and a media gateway controller; however, the above mentioned problem still remains unsolved.

### Summery of the Invention

With respect to the above problem, the present invention provides a method according to independent claim 1 and a device according to independent claim 6, for adjusting a trunk state to solve the state inconsistency phenomenon in which the MGC considers one trunk circuit state as normal while the MGW considers this trunk circuit state as malfunctioning.

Further embodiments are defined in the dependent claims.

The method for adjusting a trunk state according to the present invention comprises the message, the MGW checks that the trunk circuit is unusable and can not execute the process for the adding command message successfully; S106, the MGW sends an error response message and a state report message indicating that the trunk circuit is unusable to the MGC; and S108, after receiving the state report message, the MGC modifies state information of the trunk circuit in the media gateway controller according to the state report message and returns a response message to the MGW.

Before S102, the method further comprises: the MGC determines that the trunk circuit is usable, and the MGW determines that the trunk circuit is unusable.

In S102 the following process can be executed: the MGC adds the termination corresponding to the trunk circuit into the context corresponding to the new service.

Wherein, the context is an existing context or a new context.

In a subsequent service of the present invention, the MGC may not select a trunk circuit to process any service because the trunk circuit is in an unusable state.

The device for adjusting a trunk state according to the present invention, used to solve the problem of the state inconsistency of a trunk circuit between an MGC and an MGW, comprises: command sending means, which is configured to send an adding command message to trunk circuit state checking means when the MGC receives a request of a new service and thus uses the trunk circuit; the trunk circuit state checking means, which is configured to check whether the trunk circuit is unusable in the MGW after receiving the adding command message; state report means, which is configured to send an error response message and a state report message indicating that the trunk circuit is unusable to state modifying means when the trunk circuit state checking means checks that the trunk circuit is unusable; and the state modifying means, which is configured to, after receiving the state report message, modify the state information of the trunk circuit in the MGC according to the state report message and return a response message to the MGW.

Wherein, the trunk circuit state checking means is further configured to check whether the trunk circuit is usable in the MGC. The command sending means is further configured to add a termination corresponding to the trunk circuit into a context corresponding to the new service.

In the present invention, the context can be an existing context or a new context.

The state modifying means is further configured not to select the trunk circuit to process any service because the state of the trunk circuit is unusable in later services.

Based on the H.248/Megaco protocol, the present invention provides a method which solves the phenomenon of the trunk circuit state inconsistency wherein the MGC considers a trunk circuit state as normal while the MGW considers the trunk circuit state as abnormal.

Other features and advantages of the present invention will be described in the following specification, and partly apparent therefrom, or learned by implementing the present invention. The objects and other advantages will be realized and obtained through the structures specially defined in the specification, claims and drawings.

### Brief Description of the Drawings

Drawings are provided for a further understanding of the present invention and form a part of the specification, which are used to explain the present invention with the embodiments of the present invention without unduly limiting the scope of the present invention, wherein,
Fig.1 is a flow chart of the method for adjusting a trunk state according to the present invention;
Fig.2 is a flow solving the problem of the state inconsistency of a trunk circuit between an MGC and an MGW according to an embodiment of the present invention; and
Fig.3 is a block diagram of a device for adjusting a trunk state according to the present invention.

### Detailed Description of the Embodiments

### Function Overview

In view of the inconsistency phenomenon in which the MGC considers a trunk circuit state as normal while the MGW considers this trunk circuit state as abnormal in the prior art, the present invention, by sending a report message of a trunk circuit to the MGC by the MGW, enables the MGC to modify a state of a trunk circuit on the MGC according to the report message so as to ensure that the states of the trunk circuit between the MGC and the MGW are consistent.

The preferred embodiments of the present invention will de described hereinafter in conjunction with the drawings. It is to be understood that the preferred embodiments described herein are only used to illustrate and explain the present invention without unduly limiting the scope of the invention.

The main idea of the present invention lies in that when the MGC sends a request for occupying a trunk circuit to the MGW, if the MGW finds that the state of the trunk circuit is abnormal, it sends to the MGC a response message indicating an occupation error and sends a report message for the state of the trunk circuit.

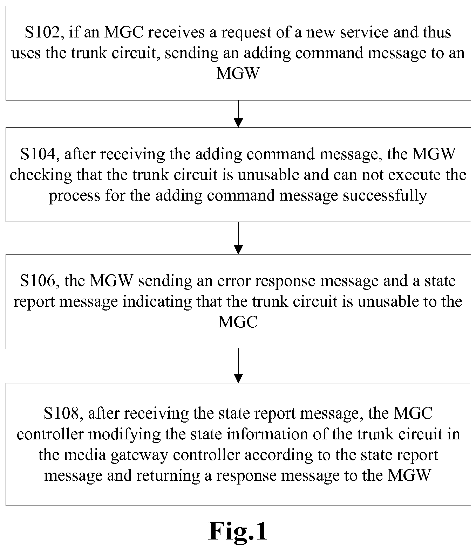

Fig.1 is a flow chart of a method for adjusting a trunk state according to the present invention. As shown in Fig.1, the method comprises the following steps:
S102, if an MGC receives a request of a new service and thus uses a trunk circuit, it sends an adding command message to an MGW;
S104, after receiving the adding command message, the MGW checks that the trunk circuit is unusable and can not execute the process for the adding command message successfully;
S106, the MGW sends an error response message and a state report message indicating that the trunk circuit is unusable to the MGC; and
S108, after receiving the state report message, the MGC modifies state information of the trunk circuit in the MGC according to the state report message and returns a response message to the MGW.

Before S102, the method further comprises: the MGC determines that the trunk circuit is usable, and the MGW determines that the trunk circuit is unusable.

In S102 the following process can be executed: the MGC adds the termination corresponding to the trunk circuit into the context corresponding to the new service.

Wherein, the context is an existing context or a new context.

In a subsequent service of the present invention, the MGC may not select the trunk circuit to process any service because the trunk circuit is in an unusable state.

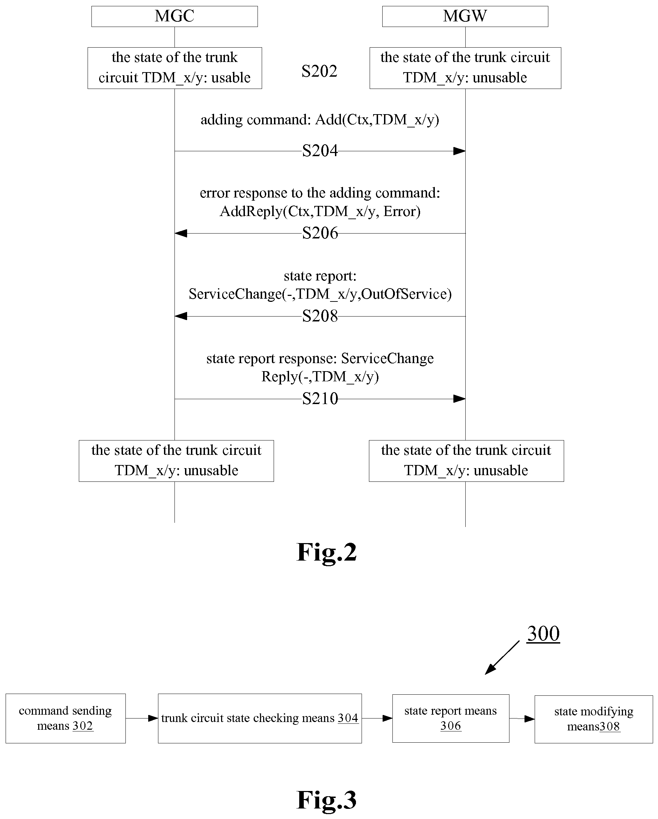

Fig.2 is a flow solving the problem of the state inconsistency of a trunk circuit between an MGC and an MGW. As shown in Fig.2, the specific flow is as follows:
S202, the phenomenon occurs that the state of a trunk circuit TDM_x/y between the MGC and the MGW is inconsistent, wherein the MGC considers that the trunk circuit is usable (identified by a solid circle), while the MGW considers that it is unusable (identified by a hollow circle);
S204, the MGC admits a new call request, and a trunk circuit needs to be occupied for processing the call. Since the MGC considers that the state of the trunk circuit TDM_x/y is usable, it determines to use this trunk circuit and sends to the MGW an Add command message in the H.248/Megaco protocol (corresponding to the adding command message mentioned above) and intends to occupy this trunk circuit for transmitting media streams and adds a termination corresponding to this trunk circuit into a context Ctx (may be an existing context or a new context) corresponding to this call.

A typical message is exemplified as follow:

```
 MEGACO/1 [1.1.1.1]:1234
 Transaction = 111111
 {
    Context = Ctx {
      Add = TDM_x/y {
          Media{
             Stream = 1{
               LocalControl{
                  Mode = SendReceive
 }
 }
 }
 }
 }
 }
```

S206, after receiving the above Add command message, the MGW performs process on the Add command message. First, the MGW checks whether the trunk circuit TDM_x/y is usable on earth. According to the checking result, it is found that the state of this trunk circuit is unusable, i.e., the trunk circuit cannot be used, which results in that the process to the Add command can not be implemented successfully, and the MGW sends an error response message to the MGC.

A typical message is exemplified as follow:

```
 MEGACO/1 [2.2.2.2]:5678
 Reply = 111111{
    Context = Ctx {
 Add = TDM_x/y {
               Error = 500 { }
 }
 }
 }
```

S208, in above step S206, the MGW finds that although the MGW considers this trunk circuit as unusable, the MGC still selects to use it, which indicates that there is a phenomena of state inconsistency in this trunk circuit state between the MGC and MGW. The MGW immediately sends to the MGC a ServiceChange command message in the H.248/Megaco protocol after sending the above error response message, so as to report the state of the trunk circuit TDM_x/y. Since the state of this trunk circuit on the MGW is unusable currently, the reported state is an unusable state.

A typical message is exemplified as follow:

```
 MEGACO/1 [2.2.2.2]:5678
 Reply = 222222 {
    Context = - {
      ServiceChange = TDM_x/y {
               Service {
                Method = Forced,
                Reason = "904 Termination malfunctioning"
 }
 }
 }
 }
```

S210, the MGC, after receiving the above state report message of the trunk circuit TDM_x/y sent by the MGW, modifies the state information of the trunk circuit in the MGC according to a state indicator in the message and sends a response message to the MGW,. Since the state of the trunk circuit TDM_x/y reported by the message sent from the MGW is unusable, the MGC modifies the state of the trunk circuit TDM_x/y into unusable. Thus, both the MGC and the MGW consider the trunk circuit state as unusable so as to come to a consistency. For a subsequent call, since the state of this trunk circuit is unusable, the MGC will not select it to process a call either, thus it is prevented from inducing a call loss again.

A typical message is exemplified as follow:

```
 MEGACO/1 [1.1.1.1]:1234
 Reply = 222222 {
    Context = - {
      ServiceChange = TDM_x/y
 }
 }
```

Fig.3 is a block diagram of a device 300 for adjusting a trunk state according to the present invention. As shown in Fig.3, the device comprises: command sending means 302, which is configured to send an adding command message to trunk circuit state checking means 304 when an MGC receives a request of a new service and thus uses a trunk circuit; the trunk circuit state checking means 304, which is connected with the command sending means 302 and configured to check whether the trunk circuit is usable in an MGW after receiving the adding command message; state report means 306, which is connected with the trunk circuit state checking means 304 and configured to send an error response message and a state report message indicating that the trunk circuit is unusable to state modifying means 308 when the trunk circuit state checking means 304 checks that the trunk circuit is unusable; the state modifying means 308, which is connected with the state report means 306 and configured to, after receiving the state report message, modify the state information of the trunk circuit in the MGC according to the state report message and return a response message to the MGW.

Wherein, the trunk circuit state checking means 304 is further configured to check whether the trunk circuit is usable in the MGC. The command sending means 302 is further configured to add a termination corresponding to the trunk circuit to the context corresponding to the new service.

In the present invention, the context can be an existing context or a new context.

The state modifying means 308 is further configured not to select the trunk circuit to process any service because the state of the trunk circuit is unusable in later services.

It should be understood that the scheme of the present invention has the following advantages, each trunk circuit with such a state inconsistency will results in only one call loss and has little effect on the service throughput of the entire network, and user experience will not be substantially affected.

In addition, for the inconsistency of a trunk state, the correction is very fast. The MGW can immediately perform the correction by reporting the trunk state when the MGW finds the situation of the trunk state inconsistency with the MGC. The correction of the phenomenon of the trunk state inconsistency increases only little message load to the interface between the MGC and the MGW. Since the MGW sends the state report message only when if finds the phenomena of the trunk state inconsistency, only two messages (ServiceChange message and the response thereof) will be generated for each trunk circuit with inconsistent states .

To sum up, based on the H.248/Megaco protocol, the scheme of the present invention solves the phenomenon of the trunk circuit state inconsistency wherein the MGC considers a trunk circuit state as normal while the MGW considers the trunk circuit state as abnormal. The present invention can process the phenomenon more rapidly and simply so as to reduce call loss.

Above description is only to illustrate the preferred embodiments but not to limit the present invention. Various alterations and changes to the present invention are apparent to those skilled in the art, as long as they are within the scope of the invention which is only defined by the appended claims.

## Claims

1. A method for adjusting a trunk state, used to solve the problem of a state inconsistency of a trunk circuit between a media gateway controller and a media gateway, **characterized by**, comprising:
if the media gateway controller receives a request of a new service which requires the use of the trunk circuit, sending an adding command message to the media gateway (S102);
after receiving the adding command message, the media gateway checking that the trunk circuit is malfunctioning and can not execute the process for the adding command message successfully (S104);
the media gateway sending an error response message and a state report message indicating that the trunk circuit is malfunctioning to the media gateway controller (S106); and
after receiving the state report message, the media gateway controller modifying the state information of the trunk circuit in the media gateway controller according to the state report message and returning a response message to the media gateway (S108).

2. The method according to Claim 1, **characterized by**, before the media gateway controller receives the request of the new service and thus uses the trunk circuit, further comprising:
the media gateway controller determining that the trunk circuit is usable; and
the media gateway determining that the trunk circuit is malfunctioning.

3. The method according to Claim 1, **characterized in that** sending the adding command message further comprises the following process:
the media gateway controller adding a termination corresponding to the trunk circuit into a context corresponding to the new service.

4. The method according to Claim 3, **characterized in that** the context is an existing context or a new context.

5. The method according to Claim 1, **characterized by**, further comprising:
in a subsequent service following the new service, the media gateway controller not selecting the trunk circuit to process any service because the trunk circuit is in an malfunctioning state.

6. A device for adjusting a trunk state, used to solve the problem of a state inconsistency of a trunk circuit between a media gateway controller and a media gateway, **characterized by**, comprising:
command sending means (302), configured to send an adding command message to a trunk circuit state checking means when the media gateway controller receives a request of a new service which requires the use of the trunk circuit;
the trunk circuit state checking means (304), configured to check whether the trunk circuit is malfunctioning in the media gateway after receiving the adding command message,;
state report means (306), configured to send an error response message and a state report message indicating that the trunk circuit is malfunctioning to a state modifying means (308) when the trunk circuit state checking means (304) checks that the trunk circuit is malfunctioning; and
the state modifying means (308), configured to, after receiving the state report message, modify the state information of the trunk circuit in the media gateway controller according to the state report message and return a response message to the media gateway.

7. The device according to Claim 6, **characterized in that** the trunk circuit state checking means (304) is further configured to check whether the trunk circuit is usable in the media gateway controller.

8. The device according to Claim 6, **characterized in that** the command sending means (302) is further configured to add a termination corresponding to the trunk circuit into a context corresponding to the new service.

9. The device according to Claim 8, **characterized in that** the context is an existing context or a new context.

10. The device according to Claim 6, **characterized in that** the state modifying means (308) is further configured not to select the trunk circuit to process any service because the state of the trunk circuit is malfunctioning in later services.

## Patentansprüche

1. Verfahren zum Anpassen eines Trunkzustands, das dazu verwendet wird, das Problem einer Zustandsinkonsistenz einer Trunkschaltung zwischen einem Media Gateway Controller und einem Media Gateway zu beheben, **dadurch gekennzeichnet, dass** es umfasst:
wenn der Media Gateway Controller eine Anfrage eines neuen Dienstes empfängt, der die Verwendung der Trunkschaltung erfordert, Senden einer Hinzufügebefehlsnachricht an das Media Gateway (S102);
nach Empfangen der Hinzufügebefehlsnachricht Feststellen, durch das Media Gateway, dass die Trunkschaltung gestört ist und den Vorgang für die Hinzufügebefehlsnachricht nicht erfolgreich ausführen kann (S104);
Senden, durch das Media Gateway, einer Fehlerantwortnachricht und einer Zustandsberichtsnachricht an den Media Gateway Controller, die darauf hinweist, dass die Trunkschaltung gestört ist (S106); und
nach Empfangen der Zustandsberichtsnachricht Modifizieren, durch den Media Gateway Controller, der Zustandsinformationen der Trunkschaltung im Media Gateway Controller gemäß der Zustandsberichtsnachricht, und Zurückgeben einer Antwortnachricht an das Media Gateway (S108).

2. Verfahren nach Anspruch 1, **dadurch gekennzeichnet, dass** es bevor der Media Gateway Controller die Anfrage des neuen Dienstes empfängt und somit die Trunkschaltung verwendet, weiter umfasst:
Bestimmen, durch den Media Gateway Controller, dass die Trunkschaltung verwendbar ist; und
Bestimmen, durch das Media Gateway, dass die Trunkschaltung gestört ist.

3. Verfahren nach Anspruch 1, **dadurch gekennzeichnet, dass** das Senden der Hinzufügebefehlsnachricht weiter den folgenden Vorgang umfasst:
Hinzufügen, durch den Media Gateway Controller, einer Terminierung, die der Trunkschaltung entspricht, zu einem Kontext, der dem neuen Dienst entspricht.

4. Verfahren nach Anspruch 3, **dadurch gekennzeichnet, dass** der Kontext ein bestehender Kontext oder ein neuer Kontext ist.

5. Verfahren nach Anspruch 1, **dadurch gekennzeichnet, dass** es weiter umfasst:
bei einem anschließenden Dienst, der dem neuen Dienst folgt, Nichtauswählen der Trunkschaltung durch den Media Gateway Controller, um einen Dienst zu verarbeiten, da sich die Trunkschaltung in einem Störzustand befindet.

6. Vorrichtung zum Anpassen eines Trunkzustands, die dazu verwendet wird, das Problem einer Zustandsinkonsistenz einer Trunkschaltung zwischen einem Media Gateway Controller und einem Media Gateway zu beheben, **dadurch gekennzeichnet, dass** es umfasst:
Befehlssendemittel (302), die dazu konfiguriert sind, eine Hinzufügebefehlsnachricht an ein Trunkschaltungs-Zustandsfeststellmittel zu senden, wenn der Media Gateway Controller eine Anfrage eines neuen Dienstes empfängt, der die Verwendung der Trunkschaltung erfordert;
das Trunkschaltungs-Zustandsfeststellmittel (304), das dazu konfiguriert ist, nach Empfangen der Hinzufügebefehlsnachricht festzustellen, ob die Trunkschaltung im Media Gateway gestört ist;
Zustandsberichtsmittel (306), die dazu konfiguriert sind, eine Fehlerantwortnachricht und eine Zustandsberichtsnachricht, die darauf hinweist, dass die Trunkschaltung gestört ist, an ein Zustandsmodifiziermittel (308) zu senden, wenn das Trunkschaltungs-Zustandsfeststellmittel (304) feststellt, dass die Trunkschaltung gestört ist; und
das Zustandsmodifiziermittel (308), das dazu konfiguriert ist, nach Empfangen der Zustandsberichtsnachricht die Zustandsinformationen der Trunkschaltung im Media Gateway Controller gemäß der Zustandsberichtsnachricht zu modifizieren und eine Antwortnachricht an das Media Gateway zurückzugeben.

7. Vorrichtung nach Anspruch 6, **dadurch gekennzeichnet, dass** das Trunkschaltungs-Zustandsfeststellmittel (304) weiter dazu konfiguriert ist, festzustellen, ob die Trunkschaltung im Media Gateway Controller verwendbar ist.

8. Vorrichtung nach Anspruch 6, **dadurch gekennzeichnet, dass** das Befehlssendemittel (302) weiter dazu konfiguriert ist, eine Terminierung, die der Trunkschaltung entspricht, zu einem Kontext hinzuzufügen, der dem neuen Dienst entspricht.

9. Vorrichtung nach Anspruch 8, **dadurch gekennzeichnet, dass** der Kontext ein bestehender Kontext oder ein neuer Kontext ist.

10. Vorrichtung nach Anspruch 6, **dadurch gekennzeichnet, dass** das Zustandsmodifiziermittel (308) weiter dazu konfiguriert ist, die Trunkschaltung bei späteren Diensten nicht auszuwählen, um einen Dienst zu verarbeiten, da der Zustand der Trunkschaltung gestört ist.

## Revendications

1. Procédé pour ajuster un état de jonction, utilisé pour résoudre le problème d'une incohérence d'état d'un circuit de jonction entre un dispositif de commande de passerelle multimédia et une passerelle multimédia, **caractérisé en ce qu'**il comprend :
si le dispositif de commande de passerelle multimédia reçoit une requête pour un nouveau service qui requiert l'utilisation du circuit de jonction, l'envoi d'un message de commande d'ajout à la passerelle multimédia (S102) ;
après la réception du message de commande d'ajout, le fait de vérifier par la passerelle multimédia que le circuit de jonction ne fonctionne pas correctement et ne peut pas exécuter avec succès le processus pour le message de commande d'ajout (S104) ;
l'envoi par la passerelle multimédia d'un message de réponse d'erreur et d'un message de rapport d'état indiquant que le circuit de jonction ne fonctionne pas correctement au dispositif de commande de passerelle multimédia (S106) ; et
après la réception du message de rapport d'état, la modification des informations d'état du circuit de jonction dans le dispositif de commande de passerelle multimédia selon le message de rapport d'état et le renvoi d'un message de réponse à la passerelle multimédia, par le dispositif de commande de passerelle multimédia (S108).

2. Procédé selon la revendication 1, **caractérisé en ce que**, avant que le dispositif de commande de passerelle multimédia reçoive la requête pour le nouveau service et qu'il utilise ainsi le circuit de jonction, il comprend en outre :
le fait de déterminer par le dispositif de commande de passerelle multimédia que le circuit de jonction est utilisable ; et
le fait de déterminer par la passerelle multimédia que le circuit de jonction ne fonctionne pas correctement.

3. Procédé selon la revendication 1, **caractérisé en ce que** l'envoi du message de commande d'ajout comprend en outre le processus suivant :
l'ajout par le dispositif de commande de passerelle multimédia d'une terminaison correspondant au circuit de jonction dans un contexte correspondant au nouveau service.

4. Procédé selon la revendication 3, **caractérisé en ce que** le contexte est un contexte existant ou un nouveau contexte.

5. Procédé selon la revendication 1, **caractérisé en ce qu'**il comprend en outre :
dans un service subséquent suivant le nouveau service, la non-sélection par le dispositif de commande de passerelle multimédia du circuit de jonction pour traiter un service quelconque parce que le circuit de jonction est dans un état ne fonctionnant pas correctement.

6. Dispositif pour ajuster un état de jonction, utilisé pour résoudre le problème d'une incohérence d'état d'un circuit de jonction entre un dispositif de commande de passerelle multimédia et une passerelle multimédia, **caractérisé en ce qu'**il comprend :
un moyen d'envoi de commande (302), configuré pour envoyer un message de commande d'ajout à un moyen de vérification d'état de circuit de jonction lorsque le dispositif de commande de passerelle multimédia reçoit une requête pour un nouveau service qui requiert l'utilisation du circuit de jonction ;
le moyen de vérification d'état de circuit de jonction (304), configuré pour vérifier si le circuit de jonction ne fonctionne pas correctement dans la passerelle multimédia après la réception du message de commande d'ajout ;
un moyen de rapport d'état (306), configuré pour envoyer un message de réponse d'erreur et un message de rapport d'état indiquant que le circuit de jonction ne fonctionne pas correctement à un moyen de modification d'état (308) lorsque le moyen de vérification d'état de circuit de jonction (304) vérifie que le circuit de jonction ne fonctionne pas correctement ; et
le moyen de modification d'état (308), configuré pour, après la réception du message de rapport d'état, modifier les informations d'état du circuit de jonction dans le dispositif de commande de passerelle multimédia selon le message de rapport d'état et renvoyer un message de réponse à la passerelle multimédia.

7. Dispositif selon la revendication 6, **caractérisé en ce que** le moyen de vérification d'état de circuit de jonction (304) est en outre configuré pour vérifier si le circuit de jonction est utilisable dans le dispositif de commande de passerelle multimédia.

8. Dispositif selon la revendication 6, **caractérisé en ce que** le moyen d'envoi de commande (302) est en outre configuré pour ajouter une terminaison correspondant au circuit de jonction dans un contexte correspondant au nouveau service.

9. Dispositif selon la revendication 8, **caractérisé en ce que** le contexte est un contexte existant ou un nouveau contexte.

10. Dispositif selon la revendication 6, **caractérisé en ce que** le moyen de modification d'état (308) est en outre configuré pour ne pas sélectionner le circuit de jonction pour traiter un service quelconque parce que l'état du circuit de jonction ne fonctionne pas correctement dans des services ultérieurs.
